# EUROPÄISCHE PATENTANMELDUNG

(11) **EP 3 889 292 A1**
(43) Veröffentlichungstag der Anmeldung: **06.10.2021**
(21) Anmeldenummer: 21162315.2
(22) Anmeldetag: 12.03.2021
(51) Int. Cl.: C22C 38/02, C22C 38/04, C22C 38/44, C22C 38/58, B23K 35/02, B23K 35/30, B23K 26/342, B22D 17/20

(54) **AUFSPANNPLATTE FÜR DRUCKGIESSMASCHINE UND HERSTELLUNGSVERFAHREN**

(30) Priorität: 01.04.2020 DE 102020204269
(71) Anmelder: Oskar Frech GmbH + Co. KG, 73614 Schorndorf (DE)
(72) Erfinder: Baesgen, Alexander, 73434 Aalen (DE)
(74) Vertreter: Patentanwälte Ruff, Wilhelm, Beier, Dauster & Partner mbB

(57) **Zusammenfassung**

1. Aufspannplatte für Druckgießmaschine und Herstellungsverfahren.
2.1. Die Erfindung bezieht sich auf Aufspannplatte für eine Druckgießmaschine, wobei die Aufspannplatte einen Grundplattenkörper (1) aus einem Gusseisenwerkstoff, eine auf wenigstens einer Plattenseite (2) des Grundplattenkörpers aufgeschweißten Oberflächenschicht (3) aus einem Edelstahlwerkstoff und eine Übergangsschicht (4) zwischen dem Grundplattenkörper und der Oberflächenschicht beinhaltet, und auf ein Verfahren zur Herstellung einer solchen Aufspannplatte.
2.2. Erfindungsgemäß wird die Oberflächenschicht (3) als eine Laserschweißauftragschicht (5) aufgebracht.
2.3. Verwendung in der Druckgusstechnik.

## Beschreibung

Die Erfindung bezieht sich auf Aufspannplatte für eine Druckgießmaschine, wobei die Aufspannplatte einen Grundplattenkörper aus einem Gusseisenwerkstoff, eine auf wenigstens einer Plattenseite des Grundplattenkörpers aufgeschweißte Oberflächenschicht aus einem Edelstahlwerkstoff und eine Übergangsschicht zwischen dem Grundplattenkörper und der Oberflächenschicht beinhaltet, und auf ein Verfahren zur Herstellung einer solchen Aufspannplatte.

Es ist bekannt, für feste und bewegliche Aufspannplatten von Druckgießmaschinen einen Grundplattenkörper aus einem Gusseisenwerkstoff zu verwenden und diesen zumindest auf einer Plattenseite, bei der es sich insbesondere um die einem Gießwerkzeug zugewandte Aufspannseite der Aufspannplatte handeln kann, mit einer Oberflächenschicht als Schutzschicht aus einem Edelstahlwerkstoff oder einem anderen Oberflächenschutzmaterial zu versehen, um diese Plattenseite vor Korrosion z.B. durch Umgebungsfeuchtigkeit und/oder durch Sprüh-/Trennmittel und/oder vor Verschleiß bzw. gegenüber mechanischen Schlag-/Stoßeinwirkungen zu schützen.

Die Patentschrift EP 3 019 297 B1 offenbart eine Aufspannplatte der eingangs genannten Art, bei der die Oberflächenschicht eine durch Impulslichtbogenschweißen aufgetragene Schicht ist. Zur Herstellung dieser Aufspannplatte wird ein Verfahren vorgeschlagen, bei dem der Grundplattenkörper an der zu beschichtenden Plattenseite zunächst einem Trocknungsschritt unterzogen wird, in welchem diese auf 150 °C bis 180 °C aufgeheizt wird. Die Aufheizung wird für eine von der vorgegebenen, späteren Auftragsdicke der Oberflächenschicht abhängige Zeitdauer beibehalten, die sich aus einer Stunde pro 30mm an geplanter Auftragsdicke bestimmt. Anschließend wird die Oberflächenschicht durch direktes Impulslichtbogenschweißen auf der zu beschichtenden Oberfläche mit Edelstahl als Füllmaterial aufgebracht. Der Schichtauftrag erfolgt mittels aneinandergrenzender und überlappender Schweißraupen, wobei der Grundplattenkörper an seiner zu beschichtenden Plattenseite auf einer Temperatur von 80 °C bis 120 °C gehalten wird und der Überlapp der Schweißraupen zwischen 35 % und 45 % beträgt. Als Edelstahlwerkstoff wird speziell ein Schweißdrahtmaterial mit der Bezeichung Edelstahl 307 mit 7 % Mangan empfohlen. Für die Oberflächenschicht wird eine Dicke von ca. 3 mm und eventuell etwas mehr angegeben. Für die Übergangsschicht, die sich durch eine größere Härte als die angrenzenden Schichten, d.h. der Grundplattenkörper aus dem Gusseisenwerkstoff einerseits und die Oberflächenschicht aus dem Edelstahlwerkstoff andererseits, auszeichnet und dort als Martensitschicht vorliegt, wird eine Dicke einigen Zehntel Millimetern angegeben.

Der Erfindung liegt als technisches Problem die Bereitstellung einer Aufspannplatte der eingangs genannten Art mit alternativer Oberflächenbeschichtung und eines zugehörigen Herstellungsverfahrens zugrunde, das die Bildung der Oberflächenschicht und der Übergangsschicht mit guten Schichteigenschaften und relativ geringem Fertigungsaufwand ermöglicht.

Die Erfindung löst dieses Problem durch die Bereitstellung einer Aufspannplatte mit den Merkmalen des Anspruchs 1 und eines Herstellungsverfahrens mit den Merkmalen des Anspruchs 6. Vorteilhafte Ausführungsformen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, wie sie durch die Rückbezüge in den Unteransprüchen definiert sind.

Bei der erfindungsgemäßen Aufspannplatte ist die Oberflächenschicht charakteristischerweise eine Laserschweißauftragschicht. Es hat sich überraschend gezeigt, dass bei dieser Bildung der Oberflächenschicht als Laserschweißauftragschicht der Edelstahlwerkstoff einen optimalen Schutz hinsichtlich Korrosion und mechanischen Einwirkungen für den Grundplattenkörper aus Gusseisenwerkstoff bietet und dass sich günstige Schichtdicken sowohl für die Oberflächenschicht als auch für die Übergangsschicht erzielen lassen, ohne dass verglichen mit herkömmlichen Oberflächenbeschichtungen von Aufspannplatten der Fertigungsaufwand nennenswert erhöht ist. So ist beispielsweise in der Regel keine Aufheizvorbehandlung der zu beschichtenden Oberfläche erforderlich. Die Übergangsschicht bildet eine Umschmelzschicht bzw. Umschmelzzone als Grenzflächenschicht zwischen dem Grundplattenkörper aus dem Gusseisenwerkstoff und der Oberflächenschicht aus dem Edelstahlwerkstoff, wobei sie als vergleichsweise harte Umschmelzzone durch das oberflächliche Verflüssigen des Gusseisenwerkstoffs des Grundplattenkörpers unter der Einwirkung des für den Laserschweißauftragprozess verwendeten Laserstrahls und das Zugeben und Aufschmelzen des pulverförmigen Edelstahlmaterials entsteht.

Untersuchungen haben gezeigt, dass durch die Realisierung der Oberflächenschicht als Laserschweißauftragschicht eine vergleichsweise homogene und gut haftende Anbindung der Oberflächenschicht an den Grundplattenkörper erreicht wird. Dabei hat sich insbesondere gezeigt, dass die Laserschweißauftragschicht eine optimale, homogene Materialanbindung des Edelstahlwerkstoffs der Oberflächenschicht an den Gusseisenwerkstoff des Grundplattenkörpers mit gutem Stoffschluss über die vermittelnde Übergangsschicht besitzt.

Die thermische Belastung des Grundplattenkörpers an seiner zu beschichtenden Plattenseite kann für die Bildung der Oberflächenschicht durch den Laserschweißauftragprozess relativ niedrig gehalten werden, und die Dicke der Übergangsschicht lässt sich dementsprechend relativ gering halten. Die durch den Laserschweißauftragprozess gebildete Übergangsschicht zeigt eine vergleichsweise hohe Homogenität und besitzt im Allgemeinen eine größere Härte als die angrenzenden Schichten und insbesondere die äußere Oberflächenschicht und trägt dadurch vorteilhaft zur Gesamthärte der Oberflächenbeschichtung bei. Dies bedeutet unter anderem eine hohe Kratz- und Stoßfestigkeit dieser Oberfläche der Aufspannplatte, wie sie für den Rüstbetrieb einer Druckgießmaschine von Vorteil ist.

Die erfindungsgemäße Aufspannplatte lässt sich mit dem erfindungsgemäßen Verfahren vorteilhaft herstellen und insbesondere mit der besagten Oberflächenbeschichtung versehen. Dazu wird die Oberflächenschicht auf die zu beschichtende Plattenseite des Grundplattenkörpers durch den Laserschweißauftragprozess unter Bildung der Übergangsschicht aufgebracht. Im Laserschweißauftragprozess wird ein Laserstrahlfleck zeilenförmig über die zu beschichtende Plattenseite geführt und ein pulverförmiges Edelstahlmaterial zugegeben, und damit werden Schweißauftragsraupen aus dem Edelstahlmaterial gebildet, die sich quer zur Zeilenrichtung partiell überlappen. Im Übrigen kann die Prozessführung für den Laserschweißauftragprozess in einer hierfür dem Fachmann an sich bekannten Weise erfolgen.

Aufgrund der relativ geringen thermischen Belastung der zu beschichtenden Plattenseite tritt im Laserschweißauftragprozess keine nennenswerte oder nur eine sehr geringere Oberflächenwelligkeit an der Beschichtungsoberfläche auf, was wiederum ermöglicht, mit geringer Schichtdicke für die Oberflächenbeschichtung auszukommen und dennoch eine lückenlose Bedeckung der Grundkörperoberfläche an seiner jeweiligen Beschichtungsseite zu erreichen. Für die Erzeugung der Oberflächenbeschichtung mit der erforderlichen, relativ geringen Dicke kann in den meisten Fällen ein einziger Zeilendurchlauf des Laserschweißauftragprozesses genügen.

In einer Weiterbildung der Erfindung besitzen die Oberflächenschicht und die Übergangsschicht zusammen eine Auftragsdicke von höchstens 2,5mm. Dies stellt eine vorteilhaft geringe Schichtdicke für die Schichtkomposition aus Übergangsschicht und Oberflächenschicht dar, wobei dennoch ein optimaler Korrosionsschutz und mechanischer Schutz durch die Oberflächenschicht bereitgestellt werden kann. Für diesen Schichtauftrag genügt im Allgemeinen ein einmaliger Zeilendurchlauf des Laserschweißauftragprozesses, d.h. eine einlagige Anordnung der Schweißraupen. In alternativen Ausführungen kann ein wiederholter Zeilendurchlauf vorgesehen sein, d.h. die Oberflächenschicht wird dann aus mehreren übereinander liegenden Schweißraupenlagen gebildet.

In einer Ausgestaltung besitzen die Oberflächenschicht und die Übergangsschicht zusammen nur eine Auftragsdicke von höchstens 2,0mm, was für entsprechende Anwendungen weitergehend Vorteile hinsichtlich geringen Herstellungsaufwandes bei immer noch ausreichender Schutzfunktion der Oberflächenbeschichtung bieten kann.

In einer Weiterbildung der Erfindung besitzt die Übergangsschicht eine Schichtdicke von höchstens 0,5mm. Die geringe Dicke der Übergangsschicht bietet u.a. den Vorteil, dass die Übergangsschicht trotz ihrer Härte relativ leicht durchtrennt werden kann, z.B. zu dem Zweck, Nuten oder dgl. in die beschichtete Plattenseite der Aufspannplatte einzubringen.

In einer Ausgestaltung der Erfindung besitzt die Übergangsschicht eine Schichtdicke von höchstens 0,3mm. In noch weiterer Ausgestaltung besitzt sie eine Schichtdicke von höchstens 0,15mm. In noch speziellerer Ausgestaltung besitzt sie eine Schichtdicke von höchstens 0,1mm. Dies stellt in abgestuften Realisierungen weitergehend eine besonders dünne Übergangsschicht dar, wobei sich zeigt, dass weiterhin eine gute Materialanbindung des Edelstahlwerkstoffs der Oberflächenschicht zum Gusseisenwerkstoff des Grundplattenkörpers erhalten bleibt.

In einer Weiterbildung der Erfindung ist die Oberflächenschicht planbearbeitet. Dies ist insbesondere für Anwendungen günstig, bei denen eine entsprechende Ebenheit bzw. Planarität der Aufspannplatte auf ihrer beschichteten Plattenseite im fertig beschichteten Zustand gewünscht ist.

In einer Weiterbildung des erfindungsgemäßen Herstellungsverfahrens erfolgt der Schichtauftrag im Laserschweißauftragprozess mit einer Auftragsdicke von höchstens 2,5mm, und nach dem Laserschweißauftragprozess wird ein Planbearbeitungsprozess durchgeführt, durch den die Oberflächenschicht bis zu einer Restdicke von mindestens 1mm und höchstens 2,2mm abgetragen wird. Dies ermöglicht die Bereitstellung der Aufspannplatte mit vergleichsweise ebener Oberfläche ihrer beschichteten Plattenseite bei gleichzeitig gutem Schutz vor Korrosion und mechanischen Einwirkungen durch die spezielle Laserschweißauftragschicht als Oberflächenschicht mit relativ geringer Schichtdicke unter Vermittlung zwischen der Oberflächenschicht aus dem Edelstahlwerkstoff und dem Grundplattenkörper aus dem Gusseisenwerkstoff durch die ebenfalls relativ dünne Übergangsschicht.

In entsprechenden Ausgestaltungen erfolgt der Schichtauftrag im Laserschweißauftragprozess mit einer Auftragsdicke von höchstens 2,0mm, und/oder die Oberflächenschicht wird bis zu einer Restdicke von mindestens 1,4mm und höchstens 2,0mm abgetragen. Dies stellt weitergehende Maßnahmen bei der Herstellung der Oberflächenbeschichtung für die Aufspannplatte dar, die für bestimmte Anwendungen Vorteile bieten.

In einer Weiterbildung der Erfindung wird für den Grundplattenkörper ein Gusseisenwerkstoff mit Kugelgraphit verwendet. Dies stellt eine für die Aufspannplatte günstige, an sich bekannte Materialwahl dar.

In einer Weiterbildung der Erfindung wird als das pulverförmige Edelstahlmaterial für die Bildung der Oberflächenschicht ein solches gewählt, das zwischen 16,0% und 22,0% Chrom (Cr), 4,0% bis 9,0% Nickel (Ni), 0,4% bis 6,0% Mangan (Mn), 1,0% bis 9,0% Molybdän (Mo), 0,03% bis 0,4% Kohlenstoff (C) und 0,1% bis 0,8% Silicium (Si) enthält. Dies resultiert in einer guten Auftragfähigkeit des Edelstahlmaterials und einer guten stoffschlüssigen Materialanbindung an den Gusseisenwerkstoff des Grundplattenkörpers.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: einen schematischen Schichtaufbau-Längsschnitt durch eine Aufspannplatte einer Druckgießmaschine,
- Fig. 2: ein Schliffbild entsprechend Fig. 1 für eine hergestellte Aufspannplatte,
- Fig. 3: eine schematische Perspektivansicht zur Veranschaulichung eines für die Herstellung der Aufspannplatte verwendbaren Laserschweißauftragprozesses und
- Fig. 4: eine schematische Längsschnittansicht für die Veranschaulichung des Laserschweißauftragprozesses.

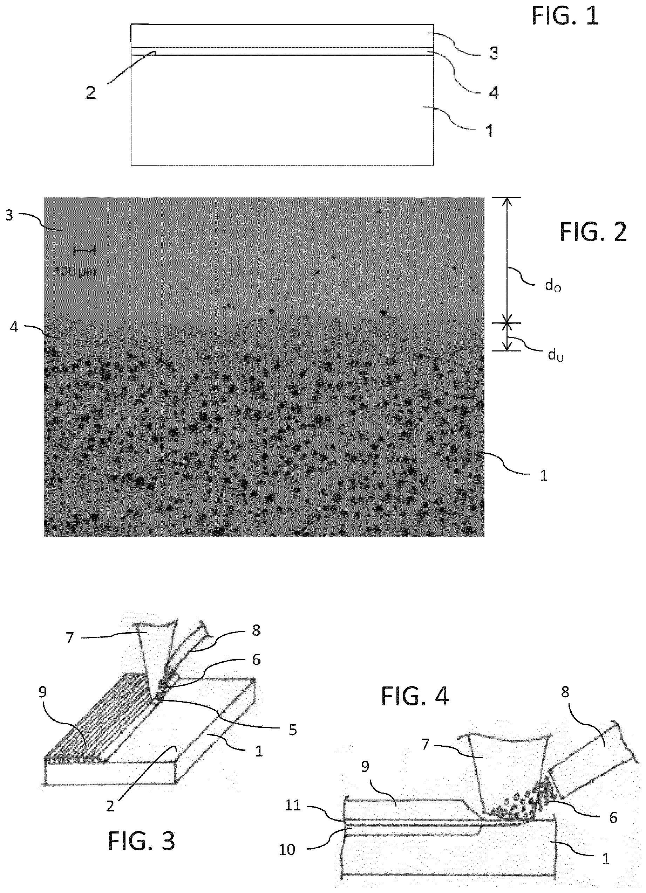

Die in den Fig. 1 und 2 schematisch bzw. anhand eines hergestellten Musters jeweils in einem hier interessierenden Teilbereich dargestellte Aufspannplatte beinhaltet einen Grundplattenkörper 1 aus einem Gusseisenwerkstoff, eine auf wenigstens einer Plattenseite 2 des Grundplattenkörpers 1 aufgeschweißte Oberflächenschicht 3 aus einem Edelstahlwerkstoff und eine Übergangsschicht 4 zwischen dem Grundplattenkörper 1 und der Oberflächenschicht 3. Die Oberflächenschicht 3 ist speziell eine Laserschweißauftragschicht. Der Grundplattenkörper 1 kann insbesondere aus einem Gusseisenwerkstoff mit Kugelgraphit bestehen.

Zur Herstellung der Aufspannplatte wird zunächst der Grundplattenkörper 1 mit der zu beschichtenden Plattenseite 2 bereitgestellt. Optional wird der Grundplattenkörper 1 auf seiner zu beschichtenden Plattenseite 2 planbearbeitet, d.h. seine Oberflächenrauigkeit durch Fräsen, Schleifen oder einen anderen herkömmlichen Planbearbeitungsprozess verringert. Anschließend wird die Oberflächenschicht 3 auf die zu beschichtende Plattenseite 2 durch einen Laserschweißauftragprozess unter Bildung der zwischenliegenden Übergangsschicht 4 aufgebracht. In diesem Laserschweißauftragprozess wird, wie in den Fig. 3 und 4 schematisch veranschaulicht, ein Laserstrahlfleck 5 zeilenförmig über die zu beschichtende Plattenseite 2 geführt und ein pulverförmiges Edelstahlmaterial 6 zugegeben. So entsteht längs jeder Zeile, entlang der sich der von einem Laserstrahl 7 bereitgestellte Laserstrahlfleck 5 bewegt, eine Schweißauftragsraupe 9 aus dem Edelstahlmaterial 6, wobei der Laserstrahlfleck 5 von einer Zeile zur nächsten, in Fig. 3 von links nach rechts, so geführt wird, dass sich jeweils benachbarte Schweißauftragsraupen 9 partiell überlappen. Als pulverförmiges Edelstahlmaterial kann insbesondere eines derjenigen handelsüblichen Edelstahlschweißmaterialien verwendet werden, die neben dem Hauptbestandteil Eisen (Fe) zwischen 16,0% und 22,0% Cr, 4,0% bis 9,0% Ni, 0,4% bis 6,0% Mn, 1,0% bis 9,0% Mo, 0,03% bis 0,4% C und 0,1% bis 0,8% Si als Minoritätsbestandteile enthalten.

Die Prozessführung für den Laserschweißauftragprozess kann z.B. die Einstrahlung des Laserstrahls 7 mit einer Leistung von 0,3 kW bis 4,0 kW und einer Intensität zwischen 10⁴ W/cm² und 10⁵ W/cm² beinhalten. Dabei verflüssigt sich oberflächlich der Gusseisenwerkstoff des Grundplattenkörpers 1 im Bereich des Laserstrahlflecks 5 und es kommt zu einer stoffschlüssigen Verbindung und damit Materialanbindung des zugeführten pulverförmigen Edelstahlmaterials 6, das im Bereich des Laserstrahlflecks 5 aufgeschmolzen wird, mit dem oberflächlich verflüssigten Gusseisenmaterial. Das pulverförmige Edelstahlmaterial 6 wird beispielsweise über ein Zufuhrrohr 8, wie gezeigt, vorzugsweise unter Verwendung eines Edelgases wie Argon oder Neon als Fördergas in den Bereich des Laserstrahlflecks 5 eingeblasen. Fig. 4 veranschaulicht schematisch die Bildung einer Wärmeeinflusszone 10, innerhalb der sich der Gusseisenwerkstoff des Grundplattenkörpers 1 oberflächlich in benötigtem Maß verflüssigt, und einer Aufmischungszone 11, in welcher die Materialverbindung von Gusseisenmaterial und Edelstahlmaterial eintritt und auf der sich dann das primäre Edelstahlmaterial in Form der Schweißauftragsraupe 9 abscheidet und damit die Oberflächenschicht 3 aus den Schweißauftragsraupen 9 bildet.

In entsprechenden Realisierungen besitzen die Oberflächenschicht 3 und die Übergangsschicht 4 zusammen eine Auftragsdicke auf der Oberfläche des Grundplattenkörpers 1 von höchstens 2,5 mm und bevorzugt von höchstens 2,0 mm, z.B. von nur ca. 1,5 mm. Dabei besitzt die Übergangsschicht 4 in entsprechenden Ausführungen eine Schichtdicke du von höchstens 0,5 mm und vorzugsweise von höchstens ca. 0,3 mm. In bevorzugten Ausführungen beträgt die Schichtdicke du der Übergangsschicht 4 höchstens 0,15 mm, d.h. nur ca. 0,15mm oder weniger, und in entsprechenden Realisierungen nur ca. 0,1 mm oder weniger.

Optional wird die aus den einzelnen Schweißauftragsraupen 9 gebildete Oberflächenschicht 3 nach beendetem Laserschweißauftragprozess einem Planbearbeitungsprozess unterzogen, durch den sie bis zu einer Restdicke von mindestens 1 mm und höchstens 2,2 mm, bevorzugt bis zu einer Restdicke von mindestens 1,4 mm und höchstens 2,0 mm, abgetragen wird. Die Oberflächenschicht 3 weist folglich eine finale Schichtdicke do entsprechend dieser Restdicke oder, im Fall ohne Planbearbeitung, entsprechend der ursprünglichen Auftragsdicke von Oberflächenschicht 3 und Übergangsschicht 4 abzüglich der Schichtdicke du der Übergangsschicht 4 auf. Je nach gewünschter finaler Ebenheit der Oberflächenschicht 3 und damit der Aufspannplatte auf ihrer beschichteten Plattenseite 2 werden in diesem Planbearbeitungsprozess z.B. zwischen etwa 0,4 mm und 0,6 mm der ursprünglichen Schichtdicke der Oberflächenschicht 3 entfernt.

Fig. 2 veranschaulicht im Schliffbild eine exemplarisch in der oben erläuterten Weise hergestellte Aufspannplatte im vorliegend interessierenden Oberflächenbereich ihrer beschichteten Plattenseite 2. In diesem Schliffbild ist deutlich die Übergangsschicht 4 als harte Umschmelzzone mit der Schichtdicke du auf dem Gusseisenwerkstoff des Grundplattenkörpers 1 und die sich ihrerseits von der Übergangsschicht 4 abhebende Oberflächenschicht 3 aus dem Edelmetallwerkstoff mit einer Schichtdicke do zu erkennen. Dieses Schliffbild belegt die Bildung einer stoffschlüssigen und ausreichend homogenen Anbindung der korrosionsbeständigen Oberflächenschicht 3 aus dem Edelmetallwerkstoff an den Gusseisenwerkstoff des Grundplattenkörpers 1 über die vergleichsweise dünne Übergangsschicht 4.

Bei Bedarf können eine oder mehrere weitere Plattenseiten der Aufspannplatte in der oben zur Plattenseite 2 erläuterten Weise mit einer solchen Oberflächenbeschichtung versehen sein. Insgesamt lässt sich damit erfindungsgemäß eine Aufspannplatte bereitstellen, die auf nur einer oder alternativ mehreren Plattenseiten mit der spezifischen Laserschweißauftragschicht als Oberflächenschicht versehen ist, wobei sich die Oberflächenschicht 3 mit relativ geringem Aufwand und bei Bedarf relativ geringer Schichtdicke bei gleichzeitig guter Haftfähigkeit am Grundplattenkörper 1 und hoher Beständigkeit gegenüber Korrosion und mechanischen Einwirkungen bilden lässt.

Wie die gezeigten und die weiteren oben erläuterten Ausführungsbeispiele deutlich machen, stellt die Erfindung eine Aufspannplatte mit einer sehr vorteilhaften Oberflächenschicht aus einem Edelstahlwerkstoff zur Verfügung, die sich mit relativ geringem Fertigungsaufwand bilden lässt und einen hohen Schutz gegenüber Korrosionseinwirkungen und mechanischen Einwirkungen bietet.

## Patentansprüche

1. Aufspannplatte für eine Druckgießmaschine, mit
- einem Grundplattenkörper (1) aus einem Gusseisenwerkstoff,
- einer auf wenigstens einer Plattenseite (2) des Grundplattenkörpers aufgeschweißten Oberflächenschicht (3) aus einem Edelstahlwerkstoff und
- einer Übergangsschicht (4) zwischen dem Grundplattenkörper und der Oberflächenschicht,
**dadurch gekennzeichnet, dass**
- die Oberflächenschicht (3) eine Laserschweißauftragschicht ist.

2. Aufspannplatte nach Anspruch 1, weiter **dadurch gekennzeichnet, dass** die Oberflächenschicht und die Übergangsschicht zusammen eine Auftragsdicke von höchstens 2,5mm, insbesondere höchstens 2,0mm, besitzen.

3. Aufspannplatte nach Anspruch 1 oder 2, weiter **dadurch gekennzeichnet, dass** die Übergangsschicht eine Schichtdicke (du) von höchstens 0,5mm, insbesondere höchstens 0,3mm, besitzt.

4. Aufspannplatte nach Anspruch 3, weiter **dadurch gekennzeichnet, dass** die Übergangsschicht eine Schichtdicke von höchstens 0,15mm, insbesondere höchstens 0,1mm, besitzt.

5. Aufspannplatte nach einem der Ansprüche 1 bis 4, weiter **dadurch gekennzeichnet, dass** die Oberflächenschicht planbearbeitet ist.

6. Verfahren zur Herstellung einer Aufspannplatte nach einem der Ansprüche 1 bis 5, mit folgenden Schritten:
- Bereitstellen des Grundplattenkörpers (1) mit der zu beschichtenden Plattenseite (2) und
- Aufbringen der Oberflächenschicht (3) auf die zu beschichtende Plattenseite durch einen Laserschweißauftragprozess unter Bildung der Übergangsschicht (4), wobei im Laserschweißauftragprozess ein Laserstrahlfleck (5) zeilenförmig über die zu beschichtende Plattenseite geführt und ein pulverförmiges Edelstahlmaterial (6) zugegeben wird und sich quer zur Zeilenrichtung partiell überlappende Schweißauftragsraupen (9) aus dem Edelstahlmaterial gebildet werden.

7. Verfahren nach Anspruch 6, wobei der Schichtauftrag im Laserschweißauftragprozess mit einer Auftragsdicke von höchstens 2,5mm, insbesondere höchstens 2,0mm, erfolgt und nach dem Laserschweißauftragprozess ein Planbearbeitungsprozess durchgeführt wird, durch den die Oberflächenschicht bis zu einer Restdicke von mindestens 1mm und höchstens 2,2mm, insbesondere von mindestens 1,4mm und höchstens 2,0mm, abgetragen wird.

8. Verfahren nach Anspruch 6 oder 7, wobei
- für den Grundplattenkörper ein Gusseisenwerkstoff mit Kugelgraphit verwendet wird und/oder
- für das pulverförmige Edelstahlmaterial ein solches gewählt wird, das zwischen 16,0% und 22,0% Chrom (Cr), 4,0% bis 9,0% Nickel (Ni), 0,4% bis 6,0% Mangan (Mn), 1,0% bis 9,0% Molybdän (Mo), 0,03% bis 0,4% Kohlenstoff (C) und 0,1% bis 0,8% Silicium (Si) enthält.
